**Europäisches Patentamt**

**European Patent Office**

**Office européen des brevets**

(11) Numéro de publication: **0 075 502**
**B1**

(12) **FASCICULE DE BREVET EUROPÉEN**

(45) Date de publication du fascicule du brevet:
23.07.86

(51) Int. Cl.⁴: **F 02 D 21/08, F 01 L 1/08**

(21) Numéro de dépôt: **82401631.5**

(22) Date de dépôt: **03.09.82**

(54) Procédé d'aménagement des conditions de fonctionnement d'un moteur à combustion interne et moteur ainsi aménagé.

(30) Priorité: **10.09.81 FR 8117177**

(43) Date de publication de la demande:
**30.03.83 Bulletin 83/13**

(45) Mention de la délivrance du brevet:
**23.07.86 Bulletin 86/30**

(84) Etats contractants désignés:
**BE CH DE GB IT LI NL SE**

(56) Documents cité:
**EP-A-0 015 791**
**DE-A-2 638 651**
**FR-A-2 271 393**
**FR-A-2 418 332**
**US-A-3 309 865**

(73) Titulaire: **SOCIETE D'ETUDES DE MACHINES THERMIQUES S.E.M.T., 2, Quai de Seine, F-93202 Saint- Denis (FR)**

(72) Inventeur: **Curtil, Rémi, 70, rue de Paris, F-95680 Montlignon (FR)**

(74) Mandataire: **Weinmiller, Jürgen, Zeppelinstrasse 63, D-8000 München 80 (DE)**

## Description

La présente invention concerne un procédé d'aménagement des conditions de fonctionnement d'un moteur à combustion interne suralimenté et le moteur à combustion interne suralimenté ainsi aménagé.

L'invention se rapporte plus particulièrement à un procédé d'aménagement des conditions de fonctionnement d'un moteur à combustion interne suralimenté fonctionnant suivant un cycle à quatre temps, de préférence à allumage spontané par compression du type Diesel.

Dans l'état de la technique antérieure, on connaît déjà, par exemple par le document EP-A-0015791, un procédé d'amélioration du rendement d'un moteur à combustion interne à quatre temps tel q'un moteur Diesel suralimenté à pression constante, du type à fermeture fixe anticipée de la soupape d'admission, la distribution présentant un recouvrement partiel, par exemple relativement important des périodes d'ouverture respectives de soupape d'échappement et de soupape d'admission d'un même cylindre pour constituer une réserve d'air ou de produits frais en aval immédiat de la soupape d'échappement, et dans lequel, en utilisant une méthode et un système dit de Miller perfectionnés, on diminue automatiquement et progressivement le rapport volumétrique ou taux de compression effectif et la température de fin de compression du moteur pendant la période s'étendant depuis l'instant après le premier allumage (au démarrage) jusqu'au moment d'obtention de la puissance nominale, compte tenu de l'évolution naturelle de la relation entre la pression d'air comprimé de suralimentation et la contre-pression des gaz à l'echappement des cylindres de travail du moteur. A cet effet, ce procédé connu réalise une fermeture anticipée de l'admission d'air, une fermeture partielle d l'échappement des gaz pendant la majeure partie de la phase d'admission d'air ou une réouverture partielle de l'échappement et sa fermeture au voisinage du point mort bas après fermeture de l'admission d'air. Ce procédé consiste donc à faire varier le coefficient ou taux de remplissage de chaque cylindre en fonction des pressions actuelles respectivement à l'admission d'air et à l'échappement des gaz de chaque cylindre du moteur.

Cette technique connue présente notamment l'inconvénient suivant: l'amélioration recherchée du coefficient ou taux de remplissage, en particulier aux charges moyennes selon la loi dite d'hélice, s'est avérée insuffisante parce qu'il dépend trop du rapport des pressions respectivement d'admission d'air et de gaz d'échappement qui est lui-même maximal dans ce domaine, d'où un excès d'air de combustion insuffisamment amélioré et une réduction insuffisante de la charge thermique (notamment de la température de chaque soupape d'échappement) du moteur.

Dans l'art antérieur, on connaît aussi un procédé utilisant un débit dérivé d'air comprimé, notamment en maintenant, entre l'aspiration et l'échappement d'un moteur, une perte de charge bien déteminée, afin de permettre, au turbocompresseur de suralimentation (à compresseur en particulier centrifuge), de fonctionner comme une turbine à gaz à proximité de la ligne de pompage et, par conséquent, avec un rendement élevé.

La mise en action du débit dérivé d'air comprimé, dans la zone de fonctionnement du moteur où il est utile, conduit naturellement à un accroissement de la pression d'échappement plus important que celui de la pression d'air, sans toutefois que cette pression d'échappement n'atteigne la pression d'air.

L'idée fondamentale de l'invention réside spécifiquement dans la combinaison nouvelle de la fermeture partielle de la soupape d'échappement pendant la majeure partie de la phase d'admission, de la réouverture partielle de cette soupape, puis de l'effet naturel du débit dérivé d'air comprimé.

Grâce à cette combinaison, il est possible d'obtenir un accroissement de la masse d'air emprisonnée dans le cylindre qu'il serait impossible d'obtenir avec une distribution par soupapes classique et un débit dérivé d'air comprimé associé. L'invention met donc à profit un phénomène physique (diminution de la pression différentielle entre l'air d'admission et les gaz d'échappement) habituellement considéré comme défavorable, car c'est la pression d'échappement qui, finalement, détermine le taux de remplissage de cylindre tel que défini plus haut.

A cet effet, le procédé conforme à l'invention consiste donc à modifier artificiellement l'évolution naturelle des pressions précitées pour réaliser une variation sélective du taux de remplissage de cylindre.

L'invention a pour objet un procédé d'amélioration des conditions de fonctionnement d'un moteur à combustion interne à quatre temps suralimenté du type à fermeture fixe anticipée de l'admission et à recouvrement partiel des périodes d'ouverture respectives de soupape d'échappement et de soupape d'admission d'un même cylindre, ainsi qu'à réouverture partielle de l'échappement et sa fermeture au voisinage du point mort bas après fermeture de l'admission, consistant à faire varier le taux de remplissage de cylindre en fonction des pressions actuelles respectivement à l'admission et à l'échappement de chaque cylindre du moteur caractérisé en ce que l'on ferme partiellement la soupape d'échappement pendant la majeure partie de la phase d'admission et en ce que l'on augmente le taux de remplissage de cylindre par un accroissement de la pression d'échappement supérieur à celui de la pression d'air au moyen d'un prélèvement sèlectif, en fonction de la vitesse de rotation et/ou de la charge actuelle du moteur, d'un débit dérivé d'air comprimé de suralimentation et son addition auxdits gaz d'échappement avant leur détente génératrice d'énergie utilisable.

En effet, on obtient ainsi, notamment par effet d'accroissement de pression, une masse d'air plus grande emprisonnée dans chaque cylindre au moment de la compression et de la combustion, donc un rapport massique plus élevé du mélange d'air et de combustible (appelé ci-après excès d'air de combustion) et un plus grand débit d'air comprimé ainsi qu'un rapport plus élevé de pression de suralimentation, d'où les conséquences avantageuses suivantes pour un point de fonctionnement donné à régime bas ou moyen du moteur:
— amélioration des conditions de démarrage à froid du moteur;

— amélioration du rendement de combustion d'où économie de combustible et, par suite, augmentation supplémentaire spontanée de l'excès d'air précité;

— diminution du délai d'inflammation et du gradient de montée en pression, d'où aptitude à brûler des combustibles à plus bas indice de cétane;

— diminution des émissions de fumées notamment noires;

— recul de la limite de pompage du compresseur notamment ccentrifuge d'air de suralimentation vers une vitesse plus basse du moteur;

— atténuation importante du niveau sonore ou bruit du moteur surtout au ralenti et aux faibles charges, due au contrôle efficace du taux de gaz résiduels, ce qui entraîne, en outre, une réduction sensible de l'émission d'oxydes d'azote à l'échappement (en diminuant ainsi la pollution atmosphérique).

Cette distribution associée au débit dérivé d'air comprimé permet, à une vitesse donnée du moteur à régime bas ou moyen, d'augmenter la pression effective donc le couple moteur réalisable par chaque cylindre. On étend ainsi la zone de fonctionnement utilisable vers les forts couples et les basses vitesses.

Avantageusement, dans le procédé de l'invention, on agit sur le taux de remplissage de cylindre en air pur pendant la période de lancement précédant le premier allumage, en augmentant le rapport de la pression d'échappement à la pression d'admission.

A cet effet, il est notamment avantageux d'introduire, au moins pendant la période de lancement précitée, une perte de charge réglable dans l'admission et/ou dans l'échappement.

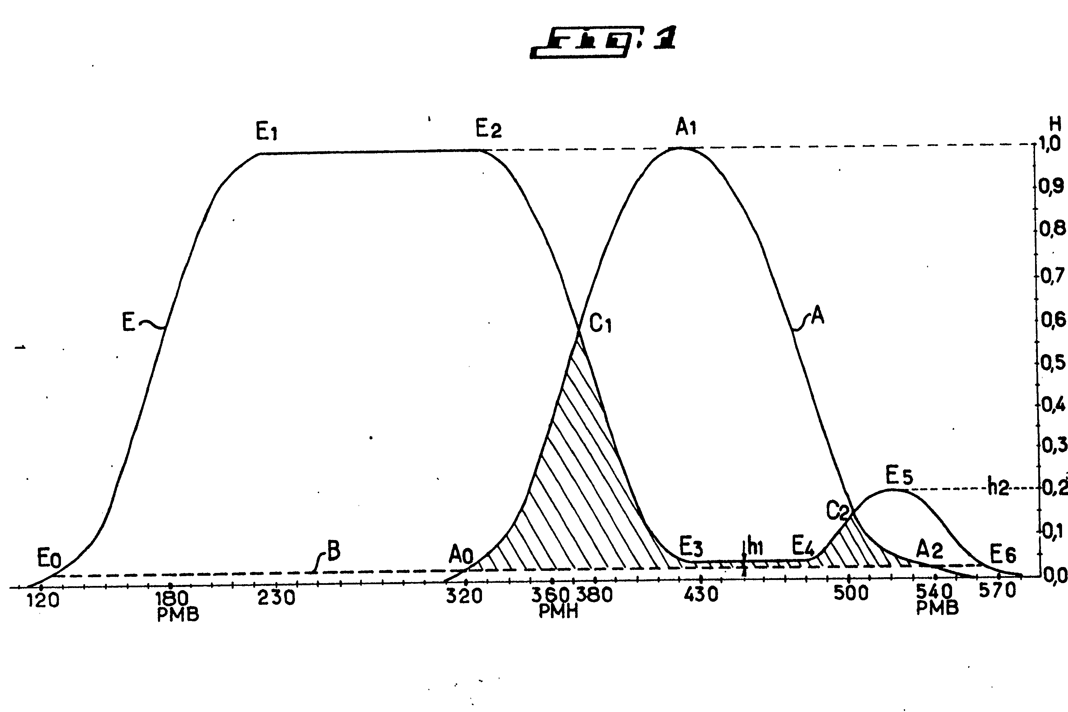

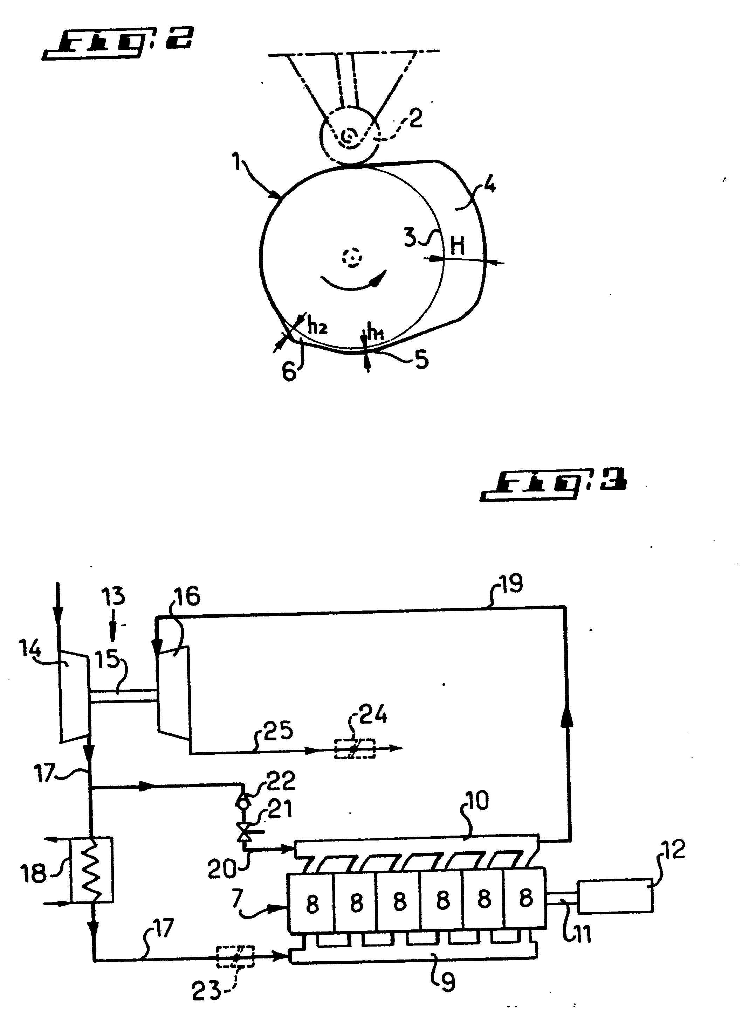

Avantageusement, la fermeture partielle de chaque soupape d'échappement du moteur correspond à une levée résiduelle au plus égale à environ le jeu de fonctionnement de ladite soupape. Cette disposition présente l'avantage d'éviter un choc (donc une usure) supplémentaire de la soupape d'échappement contre son siège, qui se produirait en cas de fermeture totale de la soupape avant sa réouverture partielle. En outre, cette levée résiduelle améliore le refroidissement de la soupape d'échappement (conformément notamment au document FR-A-2 418 332). On n'adopte pas une levée résiduelle continue plus grande sans réouverture, telle que représentée par la courbe $A_{2b}$ sur la figure 2 de la demande de brevet européen précitée (document EP-A-0 015 791), car, autour du point mort bas du piston, la section efficace libre de passage d'écoulement est insuffisante pour obtenir complètement l'effet désiré et, par ailleurs, une levée résiduelle encore plus grande entraînerait des inconvénients (aspiration excessive de gaz dans des conditions de fonctionnement, telles que régime de ralenti ou transitoire, où la pression des gaz d'échappement est supérieure à la pression d'air).

La présente invention a également pour objet un moteur à combustion interne à quatre temps suralimenté, dont chaque came de commande de soupape d'échappement comporte un bossage principal d'ouverture normale, un bossage auxiliaire de réouverture partielle angulairement espacé dudit bossage principal en arrière de celui-ci dans le sens de rotation de came, et un conduit de dérivation entre la conduite de refoulement d'air comprimé de compresseur et un point d'au moins un ou chaque collecteur d'échappement du moteur, caractérisé en ce que la came de commande de soupage d'échappement comporte un bossage intermédiaire de levée résiduelle de la soupape d'échappement, qui se raccorde de façon continue respectivement au bossage principal et au bossage auxiliaire.

L'invention sera mieux comprise et d'autres buts, caractéristiques, détails et avantages de celle-ci apparaîtront plus clairement à la lecture de la description explicative qui va suivre en se reportant aux dessins schématiques annexés donnés uniquement à titre d'exemple non limitatif illustrant un mode de réalisation spécifique actuellement préféré de l'invention et dans lesquels:

La figure 1 représente le diagramme de la distribution perfectionnée par soupapes d'admission et d'échappement selon l'invention, montrant la variation de la valeur relative de la levée H de soupape (rapportée à la levée totale ou maximale) portée en ordonnées en fonction de la position angulaire relative (exprimée en degrés sexagésimaux et portée en abscisses) du vilebrequin ou arbre à manivelles du moteur.

La figure 2 est une vue isolée de la came de commande de soupape d'échappement à profil actif conforme à l'invention.

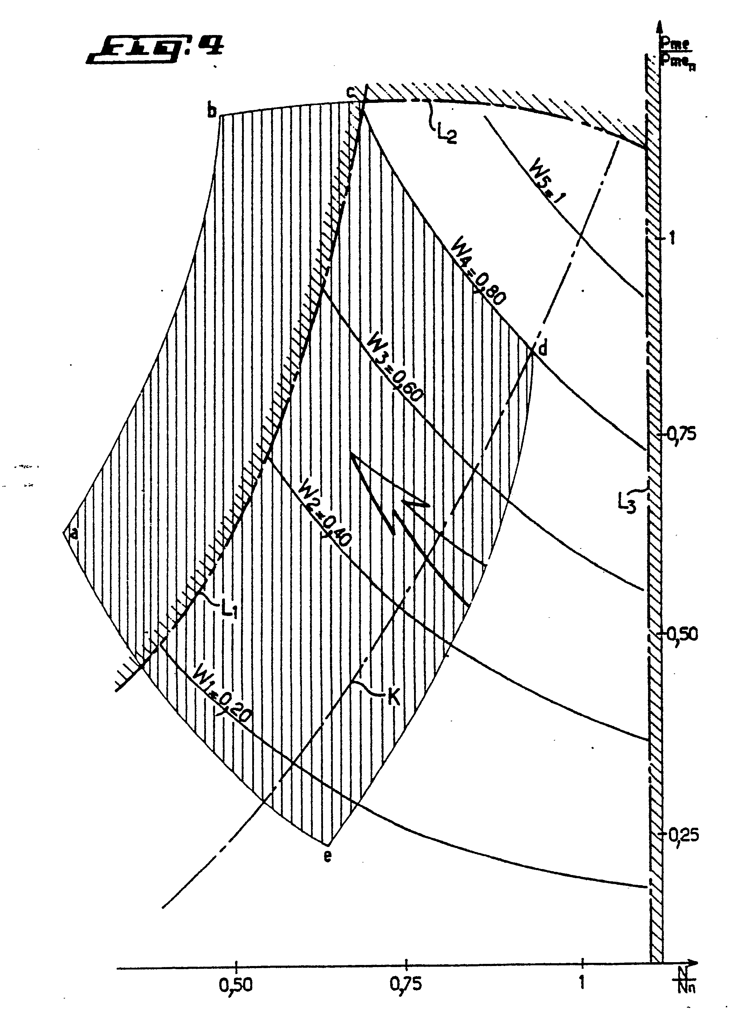

La figure 3 est un schéma synoptique fonctionnel d'ensemble d'un moteur Diesel aménagé conformément à l'invention.

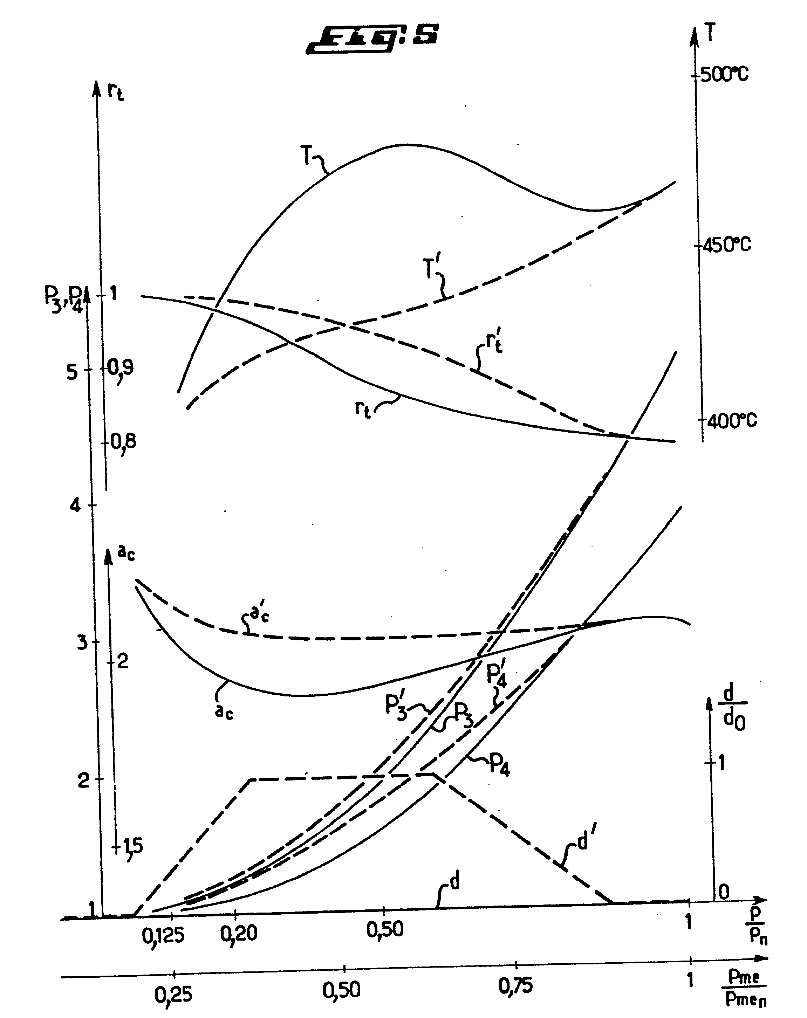

La figure 4 est un diagramme représentant graphiquement, en fonction de la valeur relative de la vitesse de rotation actuelle N du moteur (rapportée à sa vitesse nominale) portée en abscisses, la valeur relative de la pression moyenne effective instantanée $p_{me}$ (rapportée à la pression moyenne effective nominale) portée en ordonnées en fonction de diverses valeurs relatives de la puissance actuelle P du moteur (rapportée à sa puissance nominale) indiquées par une famille de courbes paramétriques, ainsi que la courbe représentative de la loi dite d'helice de la variation de la pression moyenne effective en fonction de la vitesse de rotation du moteur; et

La figure 5 représente graphiquement diverses courbes caractéristiques de paramètres de fonctionnement du moteur dans le cas d'un fonctionnement selon la loi d'hélice, ce graphique montrant notamment, en fonction de la charge ou puissance relative actuelle et de la pression moyenne effective relative actuelle (portées en abscisses) du moteur, les variations respectives de la valeur relative du débit dérivé d'air comprimé (rapporté au débit maximal), des pressions absolues respectivement d'air d'admission $p_3$ et de gaz d'échappement $p_4$ (exprimées en bars), de l'excès d'air $a_c$, du taux de remplissage $r_t$ et de la température de soupape d'échappement T (exprimée en degrés centigrades), portés en ordonnées.

En se référant à l'exemple de réalisation représenté sur la figure 1 qui montre la courbe E de levée de la soupape d'échappement et la courbe A de levée de la soupape d'admission pendant un cycle de travail à quatre temps du moteur, la ligne droite, horizontale B, tracée en traits interrompus à une faible hauteur au-dessus de l'axe des abscisses, représente la valeur compensée du jeu de fonctionnement des soupapes, de sorte que c'est cette ligne de référence B qui symbolise la position réelle de levée nulle, c'est-à-dire de fermeture complète des soupapes. En progressant de gauche à droite sur ce diagramme, les mouvements de soupape ont lieu comme suit:

— la courbe E de la soupape d'échappement comprend le début d'ouverture de la soupape d'échappement en $E_o$ avec une avance par exemple d'environ 55° par rapport au point mort bas PMB du piston, une ouverture progressive jusqu'à l'ouverture totale en E1 ayant lieu à environ 50° après le point mort bas PMB et se maintenant jusqu'en $E_2$ sur environ 100°, la fermeture progressive commençant en $E_2$ à environ 30° avant le point mort haut PMH du piston et se poursuivant après celui-ci jusqu'à une fermeture partielle ou ouverture résiduelle atteinte en $E_3$ à environ 60° après le point mort haut PMH et maintenue jusqu'en $E_4$ sur environ 60°, cette levée résiduelle de la soupape d'échappement correspondant sensiblement au jeu de fonctionnement de celle-ci; puis une réouverture partielle commençant en $E_4$ à environ 60° avant le point mort bas PMB et s'effectuant progressivement sur environ 40° jusqu'à une valeur maximale $E_5$ par exemple d'environ 20%, située à environ 20° du point mort bas PMB; et enfin la fermeture progressive partant de cette valeur maximale en $E_5$ pour se terminer par la fermeture totale en $E_6$ à environ 25° après le point mort bas PMB.

La courbe A de levée de soupape d'admission comprend le début d'ouverture en A à environ 40° avant le point mort haut PMH puis la levée progressive jusqu'à l'ouverture complète atteinte en $A_1$ à environ 65° après le point mort haut PMH; ensuite le mouvement progressif de fermeture à partir de la levée maximale $A_1$ jusqu'à la fermeture totale en $A_2$ qui a lieu à environ 5° avant le point mort bas PMB.

On constate ainsi que les soupapes respectivement d'échappement et d'admission présentent toutes les deux une avance à l'ouverture. La soupape d'admission présente une avance à la fermeture tandis que la soupape d'èchappement présente un retard à la fermeture. Il est à noter que les valeurs angulaires précitées sont données ici exclusivement à titre d'exemple et peuvent varier selon le type de moteur.

Les courbes des deux soupapes respectivement d'échappement E et d'admission A se coupent ou se croisent respectivement aux points $C_1$ et $C_2$ en déterminant ainsi un recouvrement partiel de leurs périodes respectives d'ouverture qui est représenté sur la figure 1 par la zone hachurée délimitée entre la droite horizontale B d'une part et les lignes $A_0$ $C_1$ $E_3$ $E_4$ $C_2$ $A_2$ d'autrepart. La zone $A_0$ $C_1$ $E_3$ correspond à la phase de balayage des gaz d'échappement du cylindre, mais peut être diminuée, au profit du recouvrement $E_4$ $C_2$ $A_2$ par exemple, pour les chambres de combustion ne permettant pas un recouvrement partiel important de l'ouverture des soupapes d'échappement et d'admission autour du PMH. Le point $C_1$ est par exemple à environ 15° après le point mort haut PMH et correspond à une levée par exemple d'environ 58% tandis que le point $C_2$ est par exemple à environ 38° avant le point mort bas PMB et correspond à une levée par exemple d'environ 15%.

Sur le graphique de la figure 1, la valeur du jeu de soupape, représentée par l'ordonnée de la droite horizontale B, correspond par exemple à environ 2,5% de la levée totale H, de sorte que la levée résiduelle en $E_3$—$E_4$ de la soupape d'échappement est par exemple de l'ordre de 1,5% de la levée totale H.

Cette réouverture partielle représentée par la portion $E_4$—$E_5$—$E_6$ de la courbe E, correspond à une phase de remplissage complémentaire contrôlant automatiquement la communication entre le collecteur d'échappement et le cylindre à l'aide de la soupape d'échappement qui se referme ensuite peu après le point mort bas PMB du piston, mais après l'instant de fermeture de la soupape d'admission.

La figure 2 représente une forme d'exécution de la came 1 de commande de soupape d'échappement permettant de réaliser la courbe E de levée de soupape d'échappement représentée sur la figure 1. Cette came 1, coopérant constamment avec le galet 2 de poussoir de culbuteur de soupape, comporte, radialement en saillie externe par rapport à sa circonférence de base 3:

— le bossage principal usuel 4 assurant la levée totale H de la soupape d'échappement suivant la portion $E_0$—$E_1$—$E_2$—$E_3$ de la courbe E;

— un bossage mineur 5 situé derrière le bossage principal 4 dans le sens de rotation (inverse des aiguilles d'une montre sur la figure 2) de la came et se raccordant à ce dernier, ce bossage mineur 5 assurant le maintien d'une levée résiduelle $h_1$ de la soupape d'échappement sur la portion $E_3$—$E_4$ de la courbe E et étant concentrique au cercle ce base 3 de façon à assurer une levée constante: et

— le bossage supplémentaire 6 succédant au bossage mineur 5 dans le sens de rotation précitée de la came et se raccordant à ce dernier, ce bossage supplémentaire 6 à sommet ponctuel assurant la réouverture partielle correspondant à une levée $h_2$ égale à 20% de la levée totale H par exemple (valeur en l'absence de tout jeu de soupape) sur la portion $E_4$—$E_5$—$E_6$ de la courbe E de la soupape d'échappement et se raccordant par son extrémité arrière à la circonférence de base 3 de la came correspondant à la période de fermeture totale de la soupape d'échappement.

La figure 3 illustre un exemple de réalisation pratique de l'invention appliquée à un moteur à combustion interne à pistons alternatifs tel qu'un moteur Diesel 7 à au moins une rangée de cylindres 8 en ligne, au nombre de six par exemple. Le moteur pourrait évidemment comporter plusieurs rangées de cylindres, par exemple deux rangées de cylindres disposées en V, auquel cas il y aurait avantageusement un groupe soufflant de suralimentation par rangée de cylindres. La ou chaque rangée de cylindres de ce moteur comporte un collecteur d'admission d'air 9 et au moins un collecteur d'échappement des gaz brûlés 10 qui, dans le cas d'une rangée de quatre à dix cylindres, sera avantageusement unique par rangée et du type dit modulaire à convertisseur d'impulsions comme cela est connu en soi. Ce moteur produit une puissance utile recueillie sur son arbre 11 destiné à entraîner un appareil récepteur ou d'utilisation 12 formant la charge du moteur.

Le moteur 7 est suralimenté par au moins un turbocompresseur 13 à un ou plusieurs étages comprenant un compresseur d'air notamment centrifuge 14 directement accouplé mécaniquement par un arbre intermédiaire 15 à une turbine d'entraînement 16 de préférence du type axial mue par les gaz d'échappement du moteur. L'orifice de sortie du compresseur est relié par une conduite de refoulement 17 au collecteur d'admission 9 du moteur 7 à travers un échangeur de chaleur 18 formant réfrigérant d'air terminal pour le refroidissement de l'air comprimé de suralimentation du moteur, la voie de passage de fluide chaud à refroidir de cet échangeur de chaleur étant montée en série dans cette conduite de refoulement 17 tandis que sa voie de passage de fluide froid est raccordée à un circuit de fluide réfrigérant. L'orifice d'entrée de gaz de la turbine 16 est relié par une conduite 19 à l'orifice de sortie du collecteur d'échappement 10 du moteur.

Le débit dérivé d'air comprimé peut être prélevé éventuellement avant le refroidissement d'air comprimé au moyen d'un conduit de dérivation d'air 20 branché par son extrémité amont sur la conduite de refoulement 17 avant le réfrigérant d'air comprimé 18 et par son extrémité aval en un point d'au moins un ou chaque collecteur d'échappement du moteur, soit dans le mode de réalisation représenté, par exemple sur l'extrémité amont du collecteur d'échappement 10, de façon notamment que le débit dérivé d'air comprimé soit injecté dans ce collecteur au point de plus basse pression instantanée des gaz d'échappement est avantageux car le premier cylindre du moteur peut éventuellement aspirer du fluide.

Le débit dérivé d'air comprimé de suralimentation est réglable et susceptible d'être interrompu ou arrêté, en particulier lors du fonctionnement du moteur à un niveau de puissance suffisamment élevé pourque le rendement du turbocompresseur soit bon. A cet effet, le conduit de dérivation 20 est muni d'un organe obturateur, d'étranglement et de réglage par variation sélective de la section transversale libre de passage d'écoulement du conduit, tel qu'une vanne commandée ou analogue 21 qui peut être soit du genre à fonctionnement par tout ou rien, soit à fermeture et à ouverture progressives (pour mieux faire croître le débit dérivé d'air comprimé avec une vitesse décroissante de rotation du moteur 7). La commande de cette vanne peut être rendue automatique par un asservissement approprié.

Pour éviter toute inversion du sens d'écoulement du débit dérivé d'air comprimé dans le conduit de dérivation 20, il est nécessaire que la pression des gaz d'échappement dans le collecteur d'échappement 10 soit inférieure à la pression d'air comprimé du conduit de dérivation 20 et, pour empêcher automatiquement une telle inversion du courant gazeux, un clapet de retenue ou une soupape de non-retour 22 est avantageusement monté dans le conduit de dérivation 20, de préférence avant la vanne 21.

Par ailleurs et d'une façon connue en soi, il est avantageux de prévoir un organe de réglage, de préférence à action progressive sélectivement commandée, de la section transversale de passage libre d'écoulement de conduit, tel que volet, registre, papillon ou analogue, respectivement en 23 vers l'entrée de chaque collecteur d'admission 9 du moteur et/ou en 24 vers la sortie de chaque collecteur d'échappement. Le volet ou papillon 24 sera en particulier avantageusement monté dans la conuite 25 de sortie des gaz d'échappement de la turbine 16. Ces volets 23,24 sont facultatifs.

La figure 4 illustre graphiquement le domaine d'utilisation préférentiel de l'invention. On a représenté, sur cette figure, les courbes et grandeurs relatives suivantes:

— en abscisses: le rapport $\dfrac{N}{N_n}$ de la vitesse de rotation actuelle N du moteur à sa vitesse de rotation nominale $N_n$;

— en ordonnées: le rapport $\dfrac{P_{me}}{P_{me_n}}$ de la pression moyenne effective de cycle $P_{me}$ à la pression moyenne effective nominale de cycle $P_{me_n}$;

— la courbe $L_1$ à gauche, la courbe $L_2$ en haut et la droite verticale $L_3$ à droite qui se coupent successivement en haut et comportent des hachures obliques sur leur côté externe: ces trois courbes représentent les limites de fonctionnement normal du moteur dans la zone intérieure bornée par ces courbes;

— cinq courbes d'isopuissance $W_q$, $W_2$, $W_3$, $W_4$, $W_5$ correspondant respectivement à des puissances spécifiques constantes par cylindre de 20%, 40%, 60%, 80% et 100% de bas en haut de la puissance nominale;

— la courbe K en traits mixtes représentant la variation de la pression moyenne effective en fonction de la vitesse de rotation du moteur conformément à la loi dite d'hélice (selon laquelle théoriquement, la pression moyenne effective est proportionnelle au carré de la vitesse de rotation du moteur tandis que la puissance du moteur est proportionnelle au cube de sa vitesse de rotation);

— une zone verticalement hachurée, délimitée par les lignes a b c d e a qui définit le domaine dans lequel la présente invention permet d'obtenir les améliorations indiquées.

On constate ainsi que ce domaine se situe approximativement entre 10% et 80% de la puissance nominale du moteur et l'amélioration, produite par l'invention, augmente de droite à gauche dans le sens de la flèche, c'est-à-dire sensiblement parallèlement à toute courbe d'isopuissance lorsqu'on diminue la vitesse de rotation du moteur.

La figure 5 met en évidence les effets techniques avantageux obtenus par l'invention dans des conditions de fonctionnement conformes à la loi d'hélice. Sur cette figure sont représentées les grandeurs et courbes suivantes:

— en abscisses: la puissance relative qui est le rapport $\dfrac{P}{P_n}$ de la puissance actuelle P du moteur à sa puissance nominale $P_n$ suivant une échelle non linéaire, et la pression moyenne effective relative qui est le rapport $\dfrac{P_{me}}{P_{me_n}}$ de la pression moyenne effective actuelle $P_{me}$ de cycle à la pression moyenne effective nominale $P_{me_n}$ de cycle, suivant une échelle linéaire.

— en ordonnées: à gauche, les pressions absolues respectives d'air d'admission p$_3$ et des gaz d'échappement p$_4$ exprimées en bars ainsi que l'excès d'air de combustion a$_c$ en bas et le taux de remplissage r$_t$ en haut; à droite, le degré d'ouverture realtive qui est le rapport du degré d'ouverture actuel de la vanne 21 sur le conduit de dérivation d'air 20 à son ouverture maximale d$_o$ en bas et la température T de la soupape d'échappement qui est plus particulièrement la température de la portée d'appui de la soupape, par laquelle celle-ci vient en contact avec son siège, exprimée en degrés centigrades, en haut.

Sur ce diagramme, les courbes tracées en lignes continues en traits pleins référencées par P, P$_3$, P$_4$, a$_c$, r$_t$, d, T, représentent l'effet obtenu sans débit dérivé d'air comprimé de suralimentation (c'est-à-dire sans conduit de dérivation d'air 20) par l'emploi du système de distribution selon la demande de brevet européen EP-A-15791 de la déposante avec, pour chaque cylindre du moteur, fermeture de la soupape d'admission avant le point mort bas du piston et réouverture partielle de la soupape d'échappement; tandis que les courbes tracées en traits interrompus, référencées par P', P'$_3$, P'$_4$, a'$_c$, r'$_t$, d', T' représentent l'effet produit par la combinaison nouvelle, conforme à l'invention, de ladite distribution avec l'utilisation concomitante d'un débit dérivé d'air comprimé de suralimentation par l'emploi d'un conduit de dérivation d'air 20, dont le degré d'ouverture est représentée par la courbe d'.

En progressant de bas en haut, on rencontre les courbes suivantes:
— les courbes d et d' représentant le degré d'ouverture relative (rapporté à l'ouverture maximale d$_o$), la droite horizontale d coïncidant avec l'axe des abscisses.
— les courbes P$_4$, P'$_4$ représentant l'évolution de la pression des gaz d'échappement;
— les courbes P$_3$, P'$_3$ représentant l'évolution de la pression d'air d'admission;
— les courbes a$_c$ et a'$_c$ représentant l'évolution de l'excès d'air de combustion;
— les courbes r$_t$ et r'$_t$ représentant l'évolution du taux de remplissage de cylindre; et
— les courbes T' et T représentant la température de la soupape d'échappement.

La considération de ces courbes conduit aux constatations suivantes:
— avec l'emploi d'un débit dérivé d'air comprimé de suralimentation, c'est-à-dire lorsque la vanne 21 est au moins partiellement ouverte et le conduit de dérivation d'air 20 en action, l'accroissement de la pression p$_4$ des gaz d'échappement augmente plus que l'accroissement de la pression p$_3$ d'air d'admission, d'où les conséquences suivantes:
— accroissement du taux de remplissage de cylindre de r$_t$ à r'$_t$ et, par suite,
— augmentation de l'excès d'air de combustion de a$_c$ à a'$_c$ avec
— abaissement important de la température de T à T de la soupape d'échappement, laquelle température est représentative de l'état thermique du moteur.

On constate l'influence favorable lors d'une baisse de puissance qui s'accompagne aussi d'une réduction de température alors qu'en l'absence des moyens conformes à l'invention, la température augmente avec une diminution de la charge ou puissance (ce qui est un phénomène nocif notamment dans les moteurs Diesel marins fortement suralimentés et entraînant une hélice de propulsion à pas fixe).

## Revendications

1. Procédé d'aménagement des conditions de fonctionnement d'un moteur à combustion interne à quatre temps suralimenté du type à fermeture fixe anticipée de l'admission et à recouvrement partiel des périodes d'ouverture respectives de soupape d'échappement et de soupape d'admission d'un même cylindre, ainsi qu'à réouverture partielle de l'échappement et sa fermeture au voisinage du point mort bas après fermeture de l'admission, consistant à faire varier le taux de remplissage de cylindre en fonction des pressions actuelles respectivement à l'admission et à l'échappement de chaque cylindre du moteur, caractérisé en ce que l'on ferme partiellement la soupape d'échappement pendant la majeure partie de la phase d'admission et en ce que l'on augmente le taux de remplissage de cylindre par un accroissement de la pression d'échappement supérieur à celui de la pression d'air au moyen d'un prélèvement sélectif, en fonction de la vitesse de rotation et/ou de la charge actuelle du moteur, d'un débit dérivé d'air comprimé de suralimentation et son addition auxdits gaz d'échappement avant leur détente génératrice d'énergie utilisable.

2. Procédé selon la revendication 1, caractérisé en ce qu'il consiste à agir sur le taux de remplissage de cylindre en air pur pendant la période de lancement du moteur précédant le premier allumage, en augmentant le rapport de la pression d'échappement à la pression d'admission.

3. Procédé selon au moins l'une des revendications précédentes, caractérisé en ce que la fermeture partielle précitée de chaque soupape d'échappement correspond à une levée résiduelle au plus égale à environ le jeu du fonctionnement de ladite soupape.

4. Moteur à combustion interne à quatre temps suralimenté aménagé pour l'exécution du procédé selon l'une des revendications 1 à 3, dont chaque came de commande de soupape d'échappement comporte un bossage principal (4) d'ouverture normale, un bossage auxiliaire (6) de réouverture partielle angulairement espacé dudit bossage principal (4) en arrière de celui-ci dans le sens de rotation de came, et un conduit de dérivation (20) entre la conduite de refoulement d'air comprimé (17) de compresseur (14) et un point d'au moins un ou chaque collecteur d'échappement (10) du moteur, caractérise en ce que la came de commande de soupape d'échappement comporte un bossage (5) intermédiaire de levée résiduelle de la soupape d'échappement, qui se raccorde de façon continue respectivement au bossage principal (4) et au bossage auxiliare (6).

5. Moteur à combustion interne selon la revendication 4, caractérisé en ce qu'on prévoit un refroidisseur (18) d'air dans le conduit d'admission d'air (17) du moteur.

## Patentansprüche

1. Verfahren zur Einstellung der Betriebsbedingungen eines überversorgten Viertakter-Verbrennungsmotors mit vorgezogenem festem Schließpunkt für das Ansaugen und mit partieller Überschneidung der Öffnungsperioden des Auslaß- bzw. des Ansaugventils eines selben Zylinders, sowie mit partiellem Wiederöffnen und Wiedershließen des Auslasses in der Nähe des unteren Totpunkts nach dem Schließen der Ansaugleitung, wobei das Verfahren darin besteht, den Füllgrad des Zylinders abhängig von den augenblicklichen Druckwerten in der Ansaugbzw. der Auslaßleitung jedes Zylinders des Motors variieren zu lassen, dadurch gekennzeichnet, daß das Auslaßventil während des größten Teils der Ansaugphase partiell geschlossen wird und daß der Füllgrad des Zylinders durch Erhöhung des Auslaßdrucks oberhalb des Luftdrucks vergrößert wird, indem selektiv in Abhängigkeit von der Drehgeschwindigkeit und/oder der augenblicklichen Motorbelastung ein überversorgungsdruckluftstrom entommen wird und den Auspuffgasen vor deren Entspannung zugeführt wird, bei der nutzbare Energie erzeugt wird.

2. Verfahren nach Anspruch 1, dadurch gekennzeichnet, daß auf den Füllgrad des Zylinders mit reiner Luft während der Anlaßperiode des Motors vor der ersten Zündung eingewirkt wird, indem das Verhältnis zwischen dem Auslaßdruck und dem Ansaugdruck erhöht wird.

3. Verfahren nach mindestens einem der vorhergehenden Ansprüche, dadurch gekennzeichnet, daß das erwähnte partielle Schließen jedes Auslaßventils einem Restöffnungswert von höchstens gleich dem Betriebsspeil des Ventils entspricht.

4. Überversorgter Viertakter-Verbrennungsmotor, der für die Ausführung des Verfahrens nach einem der Ansprüche 1 bis 3 eingestellt ist und in dem jede Auslaßventil-Steuernocke einen Haupthöcker (4) für die normale Öffnung, einen Hilfshöcker (6) für die partielle Wiederöffnung, der winkelmäßig zum Haupthöcker in Nockendrechrichtung nach hinten verschoben ist, und eine Leitung (20) aufweist, die zwischen dem Druckausgang (17) des Kompressors (14) und einem Punkt mindestens eines order jedes Auslaßkollektors (10) des Motors eine Verbindung herstellt, dadurch gekennzeichnet, daß die Auslaßventil-Steuernocke einen Zwischenhöcker (5) aufweist, mit dem das Auslaßventil leicht geöffnet gehalten wird und der kontinuierlich in den Haupthöcker (4) und den Hilfshöcker (6) übergeht.

5. Verbrennungsmotor nach Anspruch 4, dadurch gekennzeichnet, daß ein Luftkühler (18) in der Luftansaugleitung (17) des Motors vorgesehen ist.

## Claims

1. A method for adjusting the operating conditions of an overfed four-stroke internal combustion motor of the type having a fixed anticipated intake closing and a partial intersection of the opening periods of the outlet valve and the intake valve of the same cylinder respectively, as well as a partial reopening of the outlet and its closing in the vicinity of the lower dead point after the closing of the intake, this method consisting in making the cylinder filling rate vary in accordance with the actual intake and outlet pressures of each cylinder of the motor, characterized in that the outlet valve is partially closed during the major part of the intake phase, and that the filling rate of the cylinder is increased by increasing the outlet pressure above that of the air pressure by means of a selective withdrawal of a derived compressed overfeed-airflow in dependence of the rotation speed and/or the acutal charge of the motor, and by means of the addition of this flow to the outlet gases upstream of their expansion which creates the useful energy.

2. A method according to claim 1, characterized in that it consists in acting on the filling rate of the cylinder with fresh air during the start period of the motor prior to the first ignition, by increasing the ratio between the outlet pressure and the intake pressure.

3. A method according to at least one of the preceding claims, characterized in that said partial closing of each outlet valve correspond to a residual opening of at most equal to about the working clearance of said valve.

4. An overfed four-stroke internal combustion motor adjusted for executing the method according to one of claims 1 to 3, in which each outlet valve control cam comprises a main lobe (4) for the normal opening, an auxiliary lobe (6) for the partial reopening, this lobe being angularly spaced from the main lobe (4) to the rear with respect to the direction of rotation of the cam, and a derivation duct (20) between the compressor (14) outlet duct for compressed air (17) and a point of at least one or each outlet collector (10) of the motor, characterized in that the control cam of the outlet valve comprises an intermediate lobe (5) ensuring a residual opening of the outlet valve, this lobe being joined in a continuous manner to the main lobe (4) and to the auxiliary lobe (6).

5. An internal combustion motor according to claim 4, characterized in that an air cooling device (18) is included in the air intake duct (17) of the motor.

Fig. 1

**FIG. 2**

**FIG. 3**

**Fig.4**

# Fig. 5